# EUROPÄISCHE PATENTANMELDUNG

(11) **EP 1 209 579 A1**
(43) Veröffentlichungstag der Anmeldung: **29.05.2002**
(21) Anmeldenummer: 00125489.5
(22) Anmeldetag: 21.11.2000
(51) Int. Cl.: G06F 17/21, H04L 9/32, G06F 17/60

(54) **System zur automatisierten Abwicklung von Transaktionen durch aktives Identitätsmanagement**

(71) Anmelder: DR. Riccardo Genghini Studio Notarile Genghini, 20121 Milano (IT); Pfitzmann, Andreas, Prof. Dr., 01277 Dresden (DE); Köhntopp, Marit, 24103 Kiel (DE)
(72) Erfinder: DR. Riccardo Genghini Studio Notarile Genghini, 20121 Milano (IT); Pfitzmann, Andreas, Prof. Dr., 01277 Dresden (DE); Köhntopp, Marit, 24103 Kiel (DE)
(74) Vertreter: Körber, Martin, Dipl.-Phys.

(57) **Zusammenfassung**

Die vorliegende Erfindung betrifft die automatisierte Abwicklung von Transaktionen bzw. Vertragsschließungen zwischen Vertragsparteien (A, B) in einem Kommunikationsnetz, wie z.B. dem Internet I. Insbesondere werden die für eine derartige automatisierte Abwicklung notwendigen digitalen Dokumente (D), Datenverarbeitungsvorrichtungen (C) zur Übernahme von Zeugenfunktionen, Datenverarbeitungsvorrichtungen (P) zur Übernahme von Garantiefunktionen sowie auf entsprechenden Rechnern zu installierende Computersoftware zur Abwicklung derartiger Transaktionen und Vertragsschließungen beschrieben. Ein wesentliches Element der erfindungsgemäßen automatisierten Abwicklung von Transaktionen oder Vertragsschließungen ist ein digitales Dokument (D), mit einem Dokumentenformat mit standardisierten Feldern zur Angabe von Identitäten der Vertragsparteien (A, B) und zur Angabe von Vertragsmodalitäten, wobei die Felder aus einem standardisierten Feldbezeichner und mindestens einem für diesen Feldbezeichner erlaubten Wert bestehen, so dass auf der Basis von digitalen Signaturen (S) eine automatisierte Abwicklung von Transaktionen bzw. Vertragsschließungen möglich ist. Durch ein derartiges digitales Dokument mit einem standardisierten Dokumentenformat können Kunden und Händler im Internet grundsätzlich gleichberechtigt Verträge abschließen.

## Beschreibung

Die vorliegende Erfindung betrifft allgemein ein System zum automatisierten Abwickeln von Transaktionen bzw. Vertragsschließungen in einem Kommunikationsnetz, wie z.B. dem Internet, zwischen Vertragsparteien, die sich explizit durch dynamische digitale (ggf. pseudonyme) Identitäten authentisieren. Insbesondere betrifft die vorliegende Erfindung die für ein derartiges System notwendigen Elemente wie digitale Dokumente, Datenverarbeitungsvorrichtungen zur Übernahme von Zeugenfunktionen bei der Abwicklung von derartigen Transaktionen, wie z.B. Proxy-Server, Datenverarbeitungsvorrichtungen zur Übernahme von Garantiefunktionen und anderen Dienstleistungen bei derartigen Transaktionen sowie Computersoftware zur Abwicklung derartiger Transaktionen auf den Rechnern der einzelnen Vertragsparteien, insbesondere des Kunden und des Anbieters.

Begriffsbestimmung in Bezug auf Identität:
1. **Wahre Identität:** alle Informationen, die sich auf ein Subjekt beziehen, inkl. gesetzmäßigen Identifikationsdaten, Pseudonymen, Attributen, Identitätsattributen usw. Teilmengen davon kann man als Informationen, Attribute oder Identitätsattribute bezeichnen.
2. **Rechtmäßige Identität**: gesetzmäßige Identifikationsdaten, die sich auf ein Subjekt beziehen (mit den Gesetzgebungen über digitale Signaturen können auch Pseudonyme rechtmäßige Identitäten sein, sofern sie die dort geforderten Eigenschaften aufweisen).
3. **Pseudonyme Identität:** Pseudonym ggf. mit zusätzlichen Informationen, Attributen, Identitätsattributen usw. Pseudonyme Identitäten können rechtmäßige Identitäten sein, soweit dies gesetzlich vorgesehen ist.

Es ist heute technisch möglich, rechtlich bindend mit Personen zu interagieren, die man nicht persönlich kennt. Problematisch sind jedoch einerseits die gegenseitige sichere Identifizierung der Vertragsparteien und andererseits die rechtlich sichere Ausgestaltung der Vertragsverhandlung und Vertragsschließung bzw. der Transaktion, die in den persönlichen Offline-Beziehungen stark von der Art der Identifizierung und von den der Identität zugeordneten Attributen, sog. Identitätsattributen, inhaltlich beeinflusst wird. Problematisch beim elektronischen Handeln ist dabei insbesondere, dass die eine Vertragspartei die rechtmäßige Identität der anderen Vertragspartei nicht zuverlässig erkennen kann. Im Gegensatz zu persönlichen Vertragsverhandlungen oder Transaktionen, bei denen die Vertragsparteien einander persönlich gegenüberstehen und sich anhand von Aussehen, Sprache, Ausweis etc. eindeutig identifizieren können, bietet der Handel über ein Kommunikationsnetz, wie z.B. dem Internet, keine eindeutige Identifizierungsmöglichkeit (es sei denn, die zu identifizierende Partei will identifiziert werden und die notwendige technologische und insb. kryptographische Infrastruktur zur Identifizierung steht zur Verfügung). Jeder Mensch ist zwar durch seine DNA eindeutig gekennzeichnet, jedoch würde durch eine solche Identifizierungsmöglichkeit nicht die Sicherheit einer Online-Rechtsbeziehung erhöht. Der Grund dafür besteht darin, dass die Identität kein funktioneller Begriff ist. Es genügt nicht, die Einmaligkeit einer Identität zu garantieren, sondern es geht darum, der Identität eine Aussagekraft zu verleihen, die für eine oder mehrere Funktionen oder Zwecke geeignet ist. In der normalen (Offline-)Welt kann sich eine Person normalerweise nicht von ihren biometrischen Merkmalen befreien und ist daher eindeutig identifizierbar, was in vielen Fällen eine wesentliche Voraussetzung für die Rechtssicherheit von Transaktionen und Vertragsschließungen ist.

Die rechtmäßige Identität der physischen Personen ist hingegen in den Online-Beziehungen ohne qualifizierte Signaturzertifikate nicht erkennbar. Die heutzutage verwendeten verwaltungsrechtlichen Identitätsbegriffe und Identifikationsprozeduren für physische Personen sind geeignet für die Welt der persönlichen Beziehungen, nicht aber für die Dimension der Online-Beziehungen. Auch die Identifikation von Rechtspersonen bezieht sich immer mit einer Schlussklausel auf die Haftung (also Identifizierung) der einzelnen an der Rechtsperson beteiligten Personen: Die Rechtspersonen handeln per Definition durch Dritte, d.h. indirekt; deswegen ist die Dimension der Haftung (aus rechtlicher, also funktioneller Sicht) essentiell für eine Definition von Identität. Man kann also verallgemeinernd behaupten, dass die rechtliche Funktion der Identifikation in der persönlichen Haftbarkeit liegt. Damit ist insbesondere ebenfalls möglich, dass eine Person unter einer pseudonymen Identität statt unter ihrer nicht-pseudonymen rechtmäßigen Identität auftritt und rechtsverbindlich handelt.

Problematisch ist aber, dass - selbst wenn die rechtmäßige Identität online zu erkennen wäre - sie nicht dieselbe oder eine vergleichbare funktionelle Aussagekraft hätte, die sie in den Offline-Beziehungen beinhaltet. Dies liegt daran, dass ein örtlicher Kontext der (Rechts-)Handlung fehlt: An einem physischen Ort hat die persönliche Anwesenheit eine informative Garantiefunktion, die in den Online-Beziehungen schlicht wegfällt (Garantiefunktion der Identifikationsart, der geographischen Nähe, der persönlichen Kenntnis, der Angehörigkeit an eine bestimmte menschliche Gruppe usw.). Die rechtmäßige Identität der Personen bedarf online einer Einordnung, um dieselbe Funktionalität beizubehalten, die sie in den Offline-Beziehungen darstellt. Diese Einordnung kann nur subjektiv unterschiedlich und dynamisch sein und muss deswegen sinnvollerweise persönlich vorgenommen werden.

Biometrische Merkmale sind bei Rechtsbeziehungen in elektronischen Kommunikationsnetzen wie z.B. im Internet keine sichere Identifikationsmöglichkeit, soweit sie von unsicherer Hardware und Software verarbeitet werden. Im Gegenteil kann die Speicherbarkeit und Duplizierbarkeit eine große Unsicherheit und Unkontrollierbarkeit bei Rechtsbeziehungen bewirken. Ein Mensch, der persönlich anwesend und erkennbar ist, ist weder duplizierbar noch reproduzierbar. Daher ist der sicherste Weg für eine rechtsverbindliche Vertragsschließung die persönliche Anwesenheit der Vertragsparteien. Sind Identifikationsmerkmale eines Menschen in digitalem Format mittels unsicherer Hardware oder Software gespeichert, sind unzählige Duplikate und Reproduktionen des Originals möglich. Derartige Identifikationsmerkmale können daher nur in sicheren Umgebungen mit sicherer Hardware und sicherer Software zu einer zuverlässigen Identifikation dienen.

Digitale Signaturen können die Integrität, nicht aber unmittelbar die Authentizität des signierten Objektes bezeugen, soweit sie nicht durch eindeutige biometrische Merkmale zuverlässig aktiviert werden. Um die wirkliche Herkunft von (signierten) Dokumenten festzuhalten, können jedoch Zertifikate verwendet werden, die sozusagen elektronische Bescheinigungen sind, mit denen Signaturprüfdaten einer digitalen Signatur einer rechtmäßigen Identität, d.h. einer natürlichen oder juristischen Person, zugeordnet werden und mit denen die rechtmäßige Identität dieser Person bestätigt wird. An die Aussteller derartiger qualifizierter Zertifikate nach Signaturgesetzgebung sind demgemäß hohe Anforderungen in Bezug auf die Sicherheit und die Zuverlässigkeit der Identifikation und des Managements der Identifizierungsdaten zu stellen.
Dies aber kann und sollte nicht die Identifikations- und Kontextbewertungstätigkeit ersetzen, die normalerweise direkt die verhandelnden Parteien nach eigenen, nicht zwangsläufig formalisierten Kriterien und Ansprüchen (auch in Bezug auf den aus ihrer Sicht erforderlichen Grad an Sorgfalt) durchführen.

Bei den oben beschriebenen bekannten Möglichkeiten zur Abwicklung von Transaktionen bzw. Vertragsschließungen in einem Kommunikationsnetz ist somit die Bereitschaft einer Vertragspartei, mit einer anderen Vertragspartei einen Vertrag abzuschließen, in der Regel abhängig von der Akzeptanz bzw. dem Vertrauen in die gegebenenfalls nicht oder nur zum Teil zertifizierte Identität der jeweils anderen Vertragsparteien. Eine automatisierte Abwicklung von Transaktionen und Vertragsschließungen ist daher nur sehr eingeschränkt möglich.

Die Aufgabe der vorliegenden Erfindung liegt darin, automatisierte Abwicklungen von Vertragsschließungen bzw. Transaktionen zwischen Vertragsparteien in einem Kommunikationsnetz in effizienter, flexibler und trotzdem sicherer Weise mit Hilfe einer technischen Infrastruktur zu ermöglichen, die die Dynamik der Identität erfassen und sie auch mit Attributen (in der Form von signierten Referenzen) in Verbindung stellen kann. Die Automatisierung soll nicht nur in der Serverversion der Computersoftware, sondern auch in der Clientversion möglich sein, so dass Allgemeine Geschäftsbedingungen des Verbrauchers anwendbar werden.

Die obige Aufgabe wird durch ein digitales Dokument, insbesondere einen Vertrag, für Transaktionen oder Vertragsschließungen zwischen Vertragsparteien in einem Kommunikationsnetz gemäß Anspruch 1 gelöst. Das digitale Dokument gemäß der vorliegenden Erfindung ist in einem Dokumentenformat mit standardisierten Feldern zur Angabe von Identitäten der Vertragsparteien und zur Angabe von Vertragsmodalitäten realisiert. Diese Felder bestehen jeweils aus einem standardisierten Feldbezeichner und mindestens einem für diesen Feldbezeichner erlaubten Wert, so dass auf der Basis von digitalen Signaturen eine automatisierte Abwicklung von Transaktionen oder Vertragsschließungen ermöglicht wird. Als Werte für Feldbezeichner können generell auch Verweise auf andere Datenstrukturen oder Nullwerte erlaubt sein. Aufbauend auf dem Dokumentenformat lässt sich auch das Management von Identifikationsart sowie Identitäts- und weiteren Attributen transparent umsetzen.

Vorteilhafterweise sind weitere Felder zur Angabe des rechtlichen Status der Vertragsparteien, zur Angabe von vertraglichen Rechten und Pflichten der Vertragsparteien, zur Angabe von Zahlungsmodalitäten, zur Angabe von Vorlage- bzw. Aufbewahrungspflichten und/oder zur Angabe von Vertragsumständen vorgesehen. Die Felder zur Angabe von Vertragsumständen können dabei ein Feld zur Angabe von mit der Entstehung des digitalen Dokumentes bzw. Vertrages in Zusammenhang stehenden Dokumenten oder Daten umfassen. Das Feld zur Angabe der vertraglichen Rechte und Pflichten kann eine Liste der vertraglichen Rechte und Pflichten der Vertragsparteien bzw. einen Verweis auf ein weiteres Dokument umfassen, das diese Angaben enthält. Weiterhin kann das Feld zur Angabe von mit der Entstehung des Dokuments in Zusammenhang stehenden Dokumenten oder Daten einer Liste von Dokumenten bzw. eindeutige Verweise auf Dokumente umfassen, die diese Angaben enthalten.

Identifikationsart sowie Identitäts- und weitere Attribute der Partei können mit Hilfe der Oberfläche, die Teil des Patentobjekts ist, nicht nur verwaltet werden, sondern auch in der subjektiven Bewertung des jeweiligen Anwenders gegebenenfalls in die standardisierten Felder des Dokuments eingetragen werden. Diese Eintragung ist nicht notwendigerweise formalisiert.

Gemäß der vorliegenden Erfindung sind bei dem digitalen Dokument eine oder mehrere Signaturen vorhanden. Jede digitale Signatur einer Vertragspartei kann zusätzlich durch ein Zertifikat zertifiziert sein. Die gemäß diesem Patent ausgestellten qualifizierten Zertifikate enthalten einen Verweis auf eine Policy mit Konsequenzen für die Nichterfüllung von in dem Dokument vereinbarten Leistungen. Dabei kann jeweils ein Feld zur Angabe eines oder mehrerer Identitätsmerkmale für jede Vertragspartei vorgesehen sein, wobei jedes derartige Feld einen öffentlichen digitalen Signaturtestschlüssel der jeweiligen Vertragspartei mit einer Angabe des zugeordneten Zertifikates enthält. In der Policy können die Umstände zur Aufdeckung der rechtmäßigen (ggf. nicht-pseudonymen) Identitäten der Vertragsparteien definiert werden. Dabei kann die Policy einen Verweis auf eine vertrauenswürdige dritte Stelle enthalten, die bei Eintreten der entsprechenden Umstände für eine Vertragspartei die Identität einer anderen Vertragspartei aufdeckt. Die Policy kann weiterhin die Umstände zur Erfüllung offener Forderungen bzw. Erbringung gleichwertiger Ersatzleistungen festlegen. Dabei kann die Policy einen Verweis auf eine vertrauenswürdige dritte Stelle enthalten, die bei Eintreten entsprechender Umstände die offenen Forderungen einer Vertragspartei gegen eine andere Vertragspartei erfüllt bzw. gleichwertige Ersatzleistungen erbringt. Vorteilhafterweise enthält die Policy die Angabe eines Dokumentenformates, so dass das Zertifikat nur dann gültig ist, wenn das digitale Dokument das angegebene Dokumentenformat einhält. Hierbei kann die Angabe des Dokumentenformates eine Formatbeschreibung enthalten, die die standardisierten Felder des Dokumentenformates definiert und mit einer eindeutigen Bedeutung versieht. Dabei kann die Formatbeschreibung ein Feld mit einem Verweis auf weitere Formatbeschreibungen definieren, die weitere gültige Felder für das Dokumentenformat festlegen.

Das digitale Dokument gemäß der vorliegenden Erfindung stellt insbesondere durch das Dokumentenformat mit den standardisierten Feldern sicher, dass in jedem Vertragsdokument des elektronischen Handelns ein Verweis auf rechtsbindende Bedingungen eindeutig erkennbar ist. Manche dieser Bedingungen sollen so gekennzeichnet werden, dass sie in ihren gegebenen Formulierungen und Formen automatisiert durch entsprechende IT-Systeme ausgewertet und überprüft werden können. Die Struktur des digitalen Dokumentes der vorliegenden Erfindung basiert dabei vorzugsweise auf XML. Während der Durchführung einer Vertragsabwicklung bzw. Transaktion entstehen bei den Vertragsparteien entsprechende digitale Dokumente in einem standardisierten teilweise maschineninterpretierbaren Format, wodurch jede Vertragspartei für sich in die Lage versetzt wird, im Bedarfsfall, z.B. wenn eine Partei ihren Verpflichtungen nicht nachkommt, den Transaktionsverlauf, die geschlossenen Verträge sowie alle vorhergehenden Vertragsumstände, z.B. Produktbeschreibungen oder Geschäftsbedingungen, zu überprüfen und nachzuweisen.

Das erfindungsgemäße digitale Dokument stellt daher für alle möglichen Vertragsbedingungen und gegenseitigen Verpflichtungen einer elektronischen Vertragsabwicklung ein standardisiertes Format zur Verfügung, das eine maschinelle Erstellung und Analyse entsprechender Verträge auf automatische Weise weitgehend ermöglicht, soweit sie eindeutiger Rechtssprache und Rechtsbräuchen entsprechen. Weiterhin wird einer oder mehreren dritten Parteien ermöglicht, über die Erfüllung bzw. Nichterfüllung der Vertragsleistungen automatisch zu entscheiden, auch unter Berücksichtigung der in dem Dokument gekennzeichneten Identifikationsart und der im Dokument enthaltenen Identitäts- und weiteren Attribute. Die vorliegende Erfindung ist die am besten geeignete Möglichkeit, um mit den Identitätsattributen in den Rechtsbeziehungen umzugehen. Der Begriff "Person mit beschränkter Haftung" (PmbH) ist Teil des Patentes und soll den Umstand bezeichnen, dass eine auch nur virtuell erfasste Person funktionell als solche gesehen werden kann, wenn an diese eine online vollstreckbare Haftung geknüpft ist (eine solche virtuell vollstreckbare Haftung kann nur limitiert und objektbezogen sein).

Durch ein solches ein standardisiertes Dokumentenformat aufweisendes digitales Dokument können Kunden und Händler erstmals im Internet wirklich grundsätzlich gleichberechtigt Verträge abschließen, da die Vertragsfreiheit des Kunden damit nicht nur darauf beschränkt ist, einen vorgefertigten Vertrag des Händlers entweder vollständig anzunehmen oder insgesamt abzulehnen, und da die Vertragspartner durch das digitale Vertragsdokument ggf. auf Kontext- und Identitätsinformationen zurückgreifen können. Da immer alle verhandelnden Parteien vom Verhandlungskontext, insbesondere von der Art der Identifikation und den subjektiv wahrgenommenen (Identitäts-)Attributen der Gegenpartei(en), beeinflusst werden, wird das Patentobjekt für alle Parteien all diese Aspekte erfassen und innerhalb (oder in Vorbereitung) einer Verhandlung verwalten. Vielmehr ist der Kunde dadurch in der Lage, den Vertrag entsprechend seinen Wünschen abzuändern und diesen dem Händler anzubieten. Durch die standardisierte Form des Vertrages kann die Software auf dem Rechner des Internethändlers den Vertrag automatisch analysieren und über Zustimmung, Änderung oder Ablehnung entscheiden.

Die standardisierten Dokumente sowie die Verhandlungskontexte können in den Datenverarbeitungsvorrichtungen der beteiligten Parteien gespeichert werden und später in weitere Auswertungen eingehen. Dies kann nicht nur als Dokumentation der Vertragsschließungen bzw. Transaktionen zu einer Beweissicherung beitragen, sondern es ist damit ebenfalls möglich, die Parteien beim Identitätsmanagement für die jeweilige Rechtsbeziehung zu unterstützen. Dazu gehört, dass die Parteien bewusst unter denselben pseudonymen Identitäten auftreten können, um an einen bereits geschaffenen Kontext anknüpfen zu können. Mit Hilfe der Datenbanken, in denen die Inhalte und der Kontext abgespeichert werden, kann darüber hinaus das in bisherigen Rechtsbeziehungen erlangte Wissen der Verhandlungspartner ausgewertet und visualisiert werden. Durch die auf diese Weise geförderte Transparenz können beispielsweise die Kunden ihr Recht auf informationelle Selbstbestimmung bewusst wahrnehmen. In eine Auswertung und Visualisierung des Wissens, das die Verhandlungspartner voneinander haben, können auch zusätzliche Informationen einfließen, die nicht aus der Online-Rechtsbeziehung stammen. Solche Informationen können von der jeweiligen Partei in die vorhandenen Datenstrukturen eingetragen oder aus anderen Quellen, z.B. von vertrauenswürdigen dritten Stellen als "Privacy-Service" zur Verfügung gestellten Informationsdiensten, importiert werden. Neben der Importfunktion ist auch eine Exportfunktion vorgesehen, damit die Parteien die Informationen für einen Import an andere weitergeben können, die ähnliche Bedürfnisse haben. Dasselbe gilt für die von den eigentlichen Inhalten unabhängige Konfiguration des Systems, z.B. die Sicherheitseinstellungen oder die Interpretationsregeln für die Daten.

Die obige Aufgabe der vertrauenswürdigen Rechtsdokumentation kann auch, sofern es die Parteien vorziehen, ohne qualifizierte Signaturen zu (ver)handeln, durch eine Datenverarbeitungsvorrichtung, insbesondere einen Proxy-Server, zur Übernahme von Zeugenfunktionen bei der automatisierten Abwicklung von Transaktionen bzw. Vertragsschließungen zwischen Vertragsparteien in einem Kommunikationsnetz, wie z.B. dem Internet, gelöst werden, wobei die Datenverarbeitungsvorrichtung zum automatisierten Empfangen, Zwischenspeichern und Weiterleiten von digitalen Dokumenten, wie sie oben definiert wurden, ausgelegt ist. Die Datenverarbeitungsvorrichtung zur Übernahme von Zeugenfunktionen gemäß der vorliegenden Erfindung erfüllt dabei die Funktion eines elektronischen Zeugen, der eine automatisch ablaufende Transaktion zwischen zwei Vertragsparteien überwacht. Dies bietet dieselbe Kontextsicherung, die bisher nur durch das Zusammenspielen von Zeugen und einen gemeinsamen Verhandlungsort erreicht werden konnte. Dabei wird es selbst Vertragsparteien, die mittels digitaler Dokumente ohne eine jeweilige digitale Signatur der Vertragspartei miteinander in Kontakt treten, ermöglicht, eine vertrauenswürdige Dokumentation mit dem von der Datenverarbeitungsvorrichtung zwischengespeicherten und signierten Dokumenten zu erstellen, beispielsweise dadurch, dass die Vollständigkeit der signierten Informationen/Verträge und Kontextinformationen bezeugt werden kann. Vorteilhafterweise versieht die Datenverarbeitungsvorrichtung zur Übernahme von Zeugenfunktionen die von den Vertragsparteien empfangenen digitalen Dokumente mit einem Zeitstempel, bevor sie zwischengespeichert bzw. an die jeweils andere Vertragspartei weitergeleitet werden. Falls von den Vertragsparteien keine digitalen Signaturen für die Vertragsdokumente verwendet werden, kann die erfindungsgemäße Datenverarbeitungsvorrichtung die empfangenen Dokumente vorteilhafterweise digital signieren, so dass eine zuverlässige Protokollierung und Überprüfung der Vertragsschließung ermöglicht wird. Dabei kann die erfindungsgemäße Datenverarbeitungsvorrichtung ein von einer Vertragspartei empfangenes Dokument digital signieren, an die andere Vertragspartei weiterleiten und zumindest bis zum Erhalt einer Empfangsbestätigung zwischenspeichern. Für den Fall, dass von den Vertragsparteien digitale Signaturen für die Dokumente verwendet werden, kann die erfindungsgemäße Datenverarbeitungsvorrichtung ein von einer Vertragspartei erhaltenes und mit einer digitalen Signatur versehenes Dokument ohne die digitale Signatur an die andere Vertragspartei weiterleiten, wobei erst nach Erhalt des Dokumentes von der anderen Vertragspartei einschließlich digitaler Signatur das von der einen und der anderen Vertragspartei digital signierte Dokument an die beiden Vertragsparteien zurückgesendet wird. Um einen unnötig intensiven Umgang mit personenbezogenen Daten zu vermeiden, ist es von Vorteil, nur mit verschlüsselten Daten (z.B. durch SSL, um auch die Protokollintegrität zu belegen) zu arbeiten und die Daten in verschlüsselter Form oder deren Hash-Wert zu signieren.

Durch diese Datenverarbeitungsvorrichtung zur Übernahme von Zeugenfunktionen, die sich beispielsweise als Proxy-Server im Internet realisieren lässt, kann die Rechtssicherheit der zwischen Vertragsparteien ausgetauschten digitalen Dokumente wesentlich erhöht werden.

Weiterhin wird die obige Aufgabe durch eine Datenverarbeitungsvorrichtung zur Übernahme von Garantiefunktionen bei automatisierten Transaktionen oder Vertragsschließungen zwischen Vertragsparteien in einem Kommunikationsnetz unter Verwendung von digitalen Dokumenten, wie sie oben definiert sind, gelöst. Die erfindungsgemäße Datenverarbeitungsvorrichtung zur Übernahme von Garantiefunktionen erbringt abhängig von in einem digitalen Dokument festgelegten Bedingungen garantierte Leistungen. Die garantierten Leistungen können sich dabei beispielsweise auf die Erfüllung von in einem Vertrag festgelegten Bedingungen beziehen, oder auch auf die Nichterfüllung von in einem Vertrag vereinbarten Bedingungen. Die Datenverarbeitungsvorrichtung zur Übernahme von Garantiefunktionen ist beispielsweise als Server einer Garantiestelle im Kommunikationsnetz, wie z.B. im Internet, ausgebildet.

Durch die Zwischenschaltung einer Datenverarbeitungsvorrichtung zur automatisierten Abwicklung von Transaktionen gemäß der vorliegenden Erfindung wird erreicht, dass keine der Vertragsparteien einen Vorteil aus einem inkorrekten Verhalten ziehen kann. Eine derartige Datenverarbeitungsvorrichtung ist beispielsweise als Server eines entsprechenden Betreibers realisiert. Der (oder die) Betreiber können beispielsweise eine (oder ggf. mehrere) vertrauenswürdige dritte Stelle(n), so wie eine Bank, eine Versicherung, ein zur Übermittlung der Vertragsprodukte in Anspruch genommenes Lieferunternehmen, eine Zeitstempel-Stelle, gegebenenfalls mit zusätzlicher Notar-Funktion, ein Informationsaufbewahrungsdienst, ein Telekommunikationsunternehmen oder auch ein Unternehmens-, Berufs- oder Verbraucherverband etc. sein. Eine weitere Aufgabe von vertrauenswürdigen dritten Stellen kann die Erbringung bestimmter "Privacy-Services" sein, die z.B. darin bestehen, geeignete Konfigurationsdateien zum Import (z.B. Sicherheitseinstellungen, Interpretationsregeln) oder Informationsdienste, deren Inhalte zum Zwecke der automatisierten Auswertung in Datenbanken bei den Vertragsparteien gespeichert werden können, zur Verfügung zu stellen.

Die Datenverarbeitungsvorrichtung zur Übernahme von Garantiefunktionen gemäß der vorliegenden Erfindung umfasst vorteilhafterweise ggf. auch eine Zertifizierungseinrichtung zum Ausstellen von Zertifikaten für pseudonyme Identitäten, wobei jedes Zertifikat eine Policy bzw. einen Verweis auf eine Policy mit Konsequenzen für die Nichterfüllung von in einem Vertrag vereinbarten Leistungen enthält. Auf diese Weise können neue pseudonyme Identitäten bzw. die zugehörigen Zertifikate erstellt werden, die sich sofort im jeweiligen Kontext verwenden lassen. Weiterhin kann eine Identitätsverwaltungseinrichtung zum Verwalten nicht nur von (insbesondere rechtmäßigen) Identitäten, d.h. pseudonymen und nicht-pseudonymen Identitäten, sondern auch von personenbezogenen Informationen, Attributen oder Identitätsattributen (oder auch Angaben über die Identifikationsvorgänge) vorgesehen sein. Dabei kann die Identitätsverwaltungseinrichtung die rechtmäßige (nicht-pseudonyme) Identität einer Vertragspartei abhängig von der Nichterfüllung von in einem Vertrag festgelegten Leistungen gegenüber der anderen Vertragspartei offenbaren. Alternativ kann die Identitätsverwaltungseinrichtung für eine pseudonyme oder nicht-pseudonyme Identität einer Vertragspartei die vertraglich vereinbarte Leistung einer bestimmten Geldsumme gegenüber der anderen Vertragspartei garantieren. Anstelle der rechtmäßigen pseudonymen oder nicht-pseudonymen Identität einer Vertragspartei tritt in diesem Fall die vertraglich vereinbarte Geldsumme oder Zahlungsleistung. Die Identitätsverwaltungseinrichtung kann dabei anstelle der Angabe einer Identität für eine Vertragspartei das Vorhandensein einer bestimmten Geldsumme in einem Vertrag signieren. Das entspricht dem realen Fall des persönlichen, aber anonymen Kaufs eines Gegenstandes gegen Entrichtung einer Geldsumme in bar.

Die erfindungsgemäße Datenverarbeitungsvorrichtung zur Übernahme von Garantiefunktionen bei automatisierten Transaktionen zwischen Vertragsparteien ermöglicht so auf der Basis der Garantie dieser vertrauenswürdigen dritten Stelle(n) eine effiziente automatische Vertragsschließung zwischen Vertragsparteien in einem Kommunikationsnetz. Dies kann abhängig von der jeweiligen Ausgestaltung der Garantie-Datenverarbeitungsvorrichtung entweder durch Übernahme von zu erfüllenden Verpflichtungen durch diese dritte Stelle(n) oder durch die Übernahme von nichterfüllten Verpflichtungen versprochener Leistungen auf automatisierte Weise erfolgen, ohne dass dafür eine gerichtliche Entscheidung oder dergleichen benötigt wird. Die Datenverarbeitungsvorrichtung zur Übernahme von Garantiefunktionen kann dabei unterschiedlich ausgestaltet sein und beispielsweise auch eine Online-Schiedsgerichtsfunktion, eine Versicherungsfunktion, eine Leistungsgarantiefunktion usw. bieten.

Die vorliegende Erfindung betrifft weiterhin eine Computersoftware zur Implementierung auf einer dazugehörigen Datenverarbeitungsvorrichtung für automatisierte Transaktionen oder Vertragsschließungen zwischen Vertragsparteien in einem Kommunikationsnetz, wie z.B. dem Internet, auf der Basis der weiter oben definierten digitalen Dokumente und der oben definierten dynamischen digitalen Identitäten, Identifikationsarten sowie Identitäts- und weiteren Attribute. Die erfindungsgemäße Computersoftware ist so ausgelegt, dass sie, wenn sie auf einer Datenverarbeitungsvorrichtung einer Vertragspartei des Kommunikationsnetzes installiert ist, derartige digitale Dokumente automatisch erstellt, ggf. signiert und an eine andere Vertragspartei sendet. Die erfindungsgemäße Computersoftware prüft dabei ein von einer Vertragspartei empfangenes Dokument automatisch, ändert es gegebenenfalls, auch unter Berücksichtigung der genannten dynamischen digitalen Identitäten, Identifikationsarten sowie Identitäts- und weiteren Attribute, und sendet es an die Vertragspartei zurück. Die erfindungsgemäße Computersoftware mit dazugehöriger Datenverarbeitungsvorrichtung ist vorteilhafterweise auf einer Datenverarbeitungsvorrichtung, d.h. einem Rechner, einer Vertragspartei, z.B. eines Kunden oder eines Anbieters, installiert. Die erfindungsgemäße Computersoftware ermöglicht weiterhin vorteilhafterweise die dynamische Verwaltung von Identitätsattributen, Identifikationsarten und weiteren Attributen, die auf einer Person (physisch/juristisch), ggf. mit einem qualifizierten Zertifikat, bezogen sind. Dabei erlaubt die Identitätsattributsverwaltung Rückbezüge auf die Handlungslegitimation des eigenen Profils oder des Profils einer anderen Person. Die erfindungsgemäße Software unterstützt in ihrer Serverversion eine verstärkte Automatisierung der Vorgänge, insbesondere was eine Handlungslegitimation der Dritten angeht. Die erfindungsgemäße Computersoftware ermöglicht weiterhin vorteilhafterweise die Verwaltung der Dritten gegenüber offenbarten persönlichen Profile, insbesondere in der Form, daß durch Einzelnutzungsnachweise die Person, deren Daten in einem Profil erfaßt sind (oder ggf. ein anderer Inhaber des Profils) ein Entgelt von den Profilnutzem/-verarbeitern enthält. Eine Berichtigung und Löschung dieser Profile soll bei den Profilnutzern/verarbeitern automatisch beantragt und überprüft werden können. Die erfindungsgemäße Computersoftware stellt weiterhin vorteilhafterweise den Warenkorb für Routineeinkäufe anhand der digitalen Dokumente bzw. Verträge zusammen und verwaltet diese. Weiterhin kann die erfindungsgemäße Software die allgemeinen Geschäftsbedingungen verwalten. In der Serverversion kann die Software sowohl die eigenen allgemeinen Geschäftsbedingungen als auch die allgemeinen Geschäftsbedingungen der mit dem Server in Verbindung getretenen Kunden verwalten. In der Kundenversion oder Client Version kann die Software die eigenen allgemeinen Geschäftsbedingungen verwalten und an spezifische Transaktionen knüpfen. Weiterhin erlaubt die erfindungsgemäße Computersoftware, ein Log bzw. eine Liste der durchgeführten Transaktionen zu führen, inklusive signierter Zeugenbescheinigung und Dritten gegenüber offenbarten persönlichen Profilen.

Insbesondere bei der Einschaltung einer Datenverarbeitungsvorrichtung zur Übernahme von Garantiefunktionen ermöglicht die vorliegende Erfindung eine Erhöhung der Sicherheit von Teilnehmern bzw. Vertragsparteien an offenen Kommunikationsnetzen, da eine private Vertragspartei keine sensiblen (Zahlungs-)Daten an eine professionelle Vertragspartei (Händler, Dienstleister usw.) übertragen muss und auf Wunsch durch Verwendung geeigneter digitaler pseudonymer Identitäten anderen Vertragsparteien gegenüber anonym bleiben kann. Um dennoch den professionellen Vertragsparteien in offenen Netzen eine erhöhte Kundenbindung zu ermöglichen, kann sich der einzelne Kunde dem Händler gegenüber unfälschbar wieder unter derselben pseudonymen Identität zu erkennen geben.

Die Erfindung kann durch eine entsprechende Realisierung der Datenverarbeitungsvorrichtung bei Verbrauchern und datenverarbeitenden Stellen die zusätzliche Funktion eines sog. Einzelnutzungsnachweises übernehmen. Mit Hilfe eines solchen Einzelnutzungsnachweises kann dem Betroffenen detailliert jede Erfassung, Nutzung oder Übermittlung seiner personenbezogenen (oder auch nur personenbeziehbaren) Daten, einschließlich der verwendeten pseudonymen Identitäten und (Identitäts-)Attribute, mitgeteilt werden. Das Versenden eines Einzelnutzungsnachweises bei oder vor der jeweiligen Datenverarbeitung kann vertraglich vereinbart sein. Damit lassen sich auch Restriktionen oder Erweiterungen, z.B. eine Beschreibung der für die Datenverarbeitung vom Betroffenen freigegebenen Zwecke, sowie Art und Umfang möglicher Gutschriften (Geld oder geldartige Bonuspunkte) festlegen. Die Computersoftware kann die über das Kommunikationsnetz eintreffenden Einzelnutzungsnachweis-Mitteilungen in Empfang nehmen und automatisch auswerten, so dass die vom Betroffenen gewünschten Informationen angezeigt werden oder dass beim Betroffenen auch interaktiv, z.B. zum Freigeben einer durch die datenverarbeitende Stelle gewünschten Datenverarbeitung, nachgefragt wird. Im Falle vereinbarter Entgelte kann die Oberfläche der Computersoftware dies durch hochzählende "Gutschrift-Ticker" visualisieren.

Zusammenfassend stellt die erfindungsgemäße Möglichkeit zur automatisierten Abwicklung von Transaktionen in einem Kommunikationsnetz eine für beliebige Vertragsparteien vorteilhafte, rechtssichere und synergetische Kombination aus mehrseitiger Sicherheit, Transparenz von Systemen und Geschäftsabläufen sowie Datenschutz dar.

Die vorliegende Erfindung wird in der folgenden Beschreibung anhand bevorzugter Ausführungsbeispiele in Bezug auf die beigefügten Zeichnungen näher erläutert, in denen zeigen
Abbildung 1 eine schematische Darstellung eines ersten Ausführungsbeispiels für eine automatisierten Transaktionsabwicklung zwischen zwei Vertragsparteien über das Internet,
Abbildung 2 eine schematische Darstellung eines zweiten Ausführungsbeispiels für eine automatisierten Transaktionsabwicklung über das Internet,
Abbildung 3 eine schematische Darstellung eines dritten Ausführungsbeispiels für eine automatisierten Transaktionsabwicklung zwischen zwei Vertragsparteien über das Internet und
Abbildung 4 eine schematische Darstellung eines vierten Ausführungsbeispiels für eine automatisierten Transaktionsabwicklung zwischen zwei Vertragsparteien über das Internet.

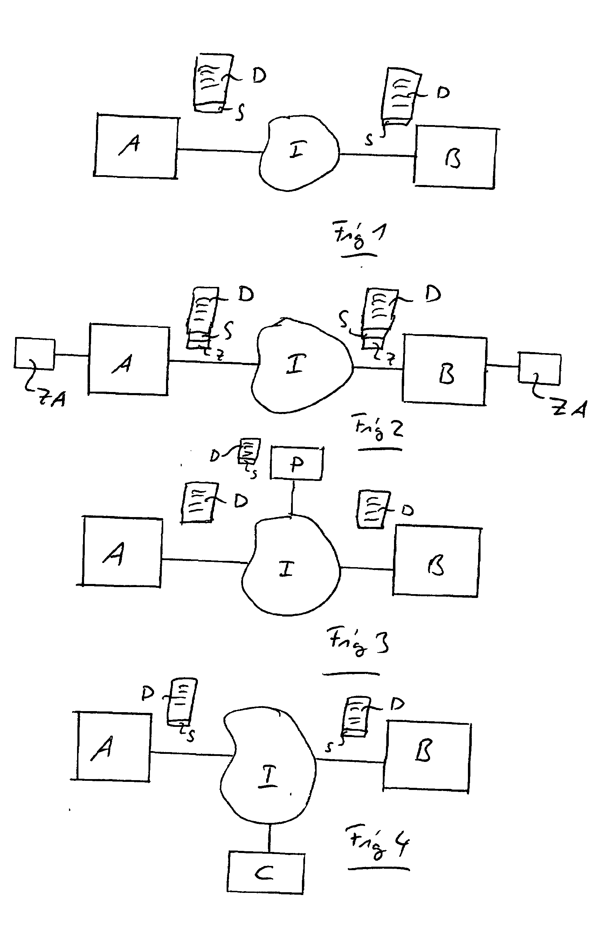

Abbildung 1 zeigt eine schematische Darstellung eines ersten Ausführungsbeispiels eines Systems zur Abwicklung von Transaktionen bzw. Verträgen gemäß der vorliegenden Erfindung. Eine erste Vertragspartei A möchte mit einer zweiten Vertragspartei B über ein Kommunikationsnetz, wie im vorliegenden Fall dem Internet I, eine Transaktion abwickeln bzw. einen Vertrag schließen. Die Vertragspartei A ist beispielsweise ein Kunde, und die Vertragspartei B ist beispielsweise ein Anbieter von Waren, Dienstleistungen oder dergleichen. Die Vertragspartei B stellt dabei z.B. ihr Angebot auf einer Website aus. Die Website ist auf einem Server der Vertragspartei B gespeichert und kann durch Anwählen der entsprechend zugeordneten Internetadresse über einen Computer der Vertragspartei A angewählt und zur Ansicht heruntergeladen werden. Die Vertragspartei A sucht sich nun aus dem Angebot der Vertragspartei B ein oder mehrere Produkte aus und schickt ein entsprechendes Angebot zum Abschließen eines Kaufvertrages über das Internet I an die Vertragspartei B.

Erfindungsgemäß wird dabei von der Vertragspartei A ein digitales Dokument D mit einem speziellen Dokumentenformat verwendet. Beispielsweise wird dieses Dokumentenformat zusammen mit der Angebots-Website der Vertragspartei B auf den Rechner der Vertragspartei A heruntergeladen. Auf dem Rechner der Vertragspartei A wird durch Ausfüllen von standardisierten Feldern im vorgesehenen Dokumentenformat ein digitales Dokument, d.h. ein Vertragsangebot, erstellt und an die Vertragspartei B übermittelt. Das Dokumentenformat mit den standardisierten Feldern stellt sicher, dass in jedem erstellten digitalen Dokument ein Verweis auf rechtsbindende Bedingungen eindeutig erkennbar ist und dass diese Bedingungen und Angaben auf der empfangenen Seite, im vorgestellten Beispiel durch den Server der Vertragspartei B bzw. durch die auf diesem Server installierte Computersoftware, automatisch ausgewertet und überprüft werden können. Vorteilhafterweise basiert die Struktur der verwendeten digitalen Dokumente D auf dem Format XML.

Die standardisierten Felder des Dokumentenformates für das digitale Dokument D umfassen Felder zur Angabe von Identitäten und/oder (Identitäts-)Attributen der Vertragsparteien und zur Angabe der Vertragsmodalitäten. Die Felder bestehen jeweils aus einem standardisierten Feldbezeichner und mindestens einem für diesen Feldbezeichner erlaubten Wert, so dass auf der Basis von digitalen Signaturen S eine automatisierte Abwicklung von Transaktionen und Vertragsschließungen ermöglicht wird. Im in der Abbildung 1 gezeigten Beispiel übermittelt die Vertragspartei A ein digitales Dokument D mit der Angabe einer gegebenenfalls pseudonymen Identität und mit der Angabe weiterer Vertragsmodalitäten zusammen mit ihrer digitalen Signatur S über das Internet I an den Server der Vertragspartei B. Dort wird das digitale Dokument D empfangen, überprüft und bewertet. Die Bewertung betrifft dabei einerseits die in den standardisierten Feldern angegebenen Vertragsmodalitäten, d.h. es wird überprüft, ob das von der Vertragspartei A abgegebene Angebot überhaupt in Bezug auf seinen Vertragsinhalt akzeptierbar ist. Weiterhin wird die gegebenenfalls pseudonyme Identität der Vertragspartei A zusammen mit der digitalen Signatur S überprüft und bewertet. Dies bedeutet, dass die Vertragspartei B ähnlich wie beim Schließen von Verträgen unter persönlich anwesenden Personen die gegebenenfalls pseudonyme Identität und die digitale Signatur S der Vertragspartei A bewerten muss, um zu entscheiden, ob dieser gegebenenfalls pseudonymen Identität genügend Vertrauen zum Abschluss dieses speziellen Vertrages entgegengebracht wird. Durch die erfindungsgemäße Verwendung der standardisierten Felder für das Dokumentenformat wird dabei eine automatisierte elektronische Überprüfung, Bewertung und damit Abwicklung der Transaktion bzw. Vertragsverhandlung ermöglicht. Dies bedeutet, dass die Vertragspartei B nicht persönlich die Angaben im digitalen Dokument D, das von der Vertragspartei A kommt, überprüfen und bewerten muss, sondern dass der Server der Vertragspartei B die Angaben in den standardisierten Feldern des digitalen Dokumentes D zusammen mit der gegebenenfalls pseudonymen Identität der Vertragspartei A und deren digitaler Signatur überprüft, bewertet und über Annahme, Ablehnung oder die Abgabe eines modifizierten Vertragsangebotes entscheiden kann. Dieser Vorgang ist vorteilhafterweise im Einzelnen einstellbar und dynamisch verwaltbar, auch durch die Definition von Handlungsparametern, die sich subjektiv auf die Identität, Identifikationsart und (Identitäts-)Attribute abstimmen lassen.

Im Fall der Änderung des Vertragsangebotes übersendet der Server der Vertragspartei B automatisch ein modifiziertes digitales Dokument D, gegebenenfalls mit einer digitalen Signatur S der Vertragspartei B, über das Internet I zurück an die Vertragspartei A, d.h. deren Rechner. Falls die Vertragspartei B ein professioneller Anbieter von Waren, Dienstleistungen oder dergleichen im Internet ist, so dürfte es nicht notwendig sein, dass ein modifiziertes Vertragsangebot der Vertragspartei B mit einer digitalen Signatur versehen an die Vertragspartei A zurückgesendet wird. In diesem Fall ist der Vertragspartei A die rechtmäßige Identität der Vertragspartei bekannt, zumindest wenn die Vertragspartei B ein mittleres oder großes Unternehmen ist und die Authentizität der zugehörigen Webpräsenz bzw. des digitalen Kommunikationspartners sichergestellt ist. Ist die Vertragspartei B jedoch ein kleines Unternehmen oder eine Privatperson, so hat in der Regel auch die Vertragspartei A ein besonderes Interesse an der Überprüfung der rechtmäßigen (pseudonymen oder nicht-pseudonymen) Identität der Vertragspartei B. Ebenso wie der Server bzw. der Rechner der Vertragspartei B wird daher auch der Rechner der Vertragspartei A bzw. die auf diesem installierte Software entsprechende Funktionalitäten zum Verwalten rechtmäßigerr pseudonymer und nicht-pseudonymer Identitäten anderer Vertragsparteien und gegebenenfalls entsprechender Identitätsattribute zur Beurteilung der Zuverlässigkeit dieser Identitäten aufweisen. Die Datenverarbeitungsvorrichtungen werden ermöglichen, aus der Art der Identifikation, aus den Kontextgegebenheiten und aus den Identitäts- oder weiteren Attributen autorisierte Verhandlungs- und Vertragsschließungsprozesse sowie auch Vertragsinhalte zu definieren. Da solche Prozessdefinitionen sehr komplex sind, vor allem aus semantischer Sicht, wird das patentierte Verfahren die aktive progressive Verwaltung der Prozessdefinition ermöglichen.

Im in der Abbildung 1 dargestellten einfachen Fall erfolgt eine Transaktion bzw. Vertragsschließung auf der Basis von digitalen Dokumenten D, die jeweils mit einer digitalen Signatur S der Vertragsparteien A, B versehen sind. Die Authentizität der verwendeten pseudonymen oder nicht-pseudonymen Identitäten und der digitalen Signaturen S wird in den Rechnern bzw. Servern der Vertragsparteien A und B automatisiert auf der Basis vordefinierter Bewertungskriterien, z.B. auf der Basis von Identifikationsart sowie Identitäts- oder weiteren Attributen, beurteilt. Beispielsweise können Identitäten, mit denen bereits vorher erfolgreiche Transaktionen bzw. Verträge abgewickelt wurden, als sehr verlässlich eingestuft werden ("positive Attributsbewertung"), während Identitäten, die unbekannt sind, als weniger verlässlich eingestuft werden. Diese Bewertung der Verlässlichkeit der Identität der anderen Vertragspartei könnte beispielsweise auch abhängig vom Vertragsgegenstand bzw. dem Vertragsvolumen erfolgen.

Zur Erhöhung der Vertrags- bzw. Rechtssicherheit können die digitalen Signaturen (bzw. digitalen Signaturtestschlüsseln) S durch zusätzliche qualifizierte Zertifikate Z zertifiziert werden. Diese können sowohl X.509-Zertifikate als auch andersartig formalisierte Textdokumente sein. Dieser Fall ist schematisch in Abbildung 2 dargestellt. Das in Abbildung 2 dargestellte zweite Ausführungsbeispiel entspricht dem in Abbildung 1 dargestellten Ausführungsbeispiel, wobei zusätzlich ein Zertifikat Z für jede digitale Signatur S der Vertragsparteien A und B verwendet wird.

Normalerweise wird jedem von einer der Vertragsparteien A bzw. B erstellten digitalen Dokument D außer der digitalen Signatur S der jeweiligen Vertragspartei zusätzlich ein Zertifikat Z angehängt, das die Authentizität der digitalen Signatur und somit der rechtmäßigen pseudonymen oder nicht-pseudonymen Identität der jeweiligen Vertragspartei A, B sicherstellt, wenn es sich um qualifizierte Zertifikate nach 1999/93/EG handelt. Im in der Abbildung 2 dargestellten Fall enthält jede Vertragspartei A, B das qualifizierte Zertifikat Z von einem Zertifikat-Aussteller ZA ausgestellt. Dabei können jeweils verschiedene Zertifikat-Aussteller oder ein gleicher Zertifikat-Aussteller in Anspruch genommen werden. Qualifizierte Zertifikate weisen dennoch, gemäß existierenden Standards und staatlichen Regulierungen, nur einen nicht ausreichenden Teil der Informationen auf, die notwendig sind, um Online-Transaktionen so rechtssicher zu gestalten wie heutige anonyme oder pseudonyme Offline-Transaktionen (beispielweise "Boutique-" oder "Supermarkt-Einkauf" in den Offline-Beziehungen).

Für die Automatisierung der Verhandlung als auch für die Bilateralisierung des Verhandlungsvorganges sind weitere auf eine Vertragspartei bezogene Informationen notwendig. Es reicht nicht aus, diese Informationen einfach in den optional fields vom X.509-Standard einzufügen, da dies eine unzumutbare Vereinfachung und Formalisierung erfordern würde, so dass deren Aussagekraft über die Vertragspartei nichtig wäre. Sie sollten also in einem formalisierten Dokument aufgeführt werden, das vorteilhafterweise in der Transaktion so wie ein Attributszertifikat behandelt wird.

Die jeweilige Vertragspartei A bzw. B muss daher einen Vertrag mit dem Zertifikat-Aussteller ZA abgeschlossen haben, so dass der Zertifikat-Aussteller in der Lage ist, die Attribute (wie z.B. Bonität bzw. Verlässlichkeit der jeweiligen Vertragspartei) entweder durch signierte Referenzen ungeprüft zu übernehmen oder gar zu erfassen, beurteilen und dementsprechend zu zertifizieren. Falls eine der Vertragsparteien A und B die Transaktion bzw. Vertragsschließung auf der Basis einer pseudonymen Identität durchführen will, muss daher der das Zertifikat Z ausstellende Zertifikat-Aussteller heutzutage die rechtmäßige nicht-pseudonyme Identität dieser Vertragspartei kennen. Alternativ zu dem in Abbildung 2 dargestellten Beispiel könnten die beiden Zertifikate Z für die digitalen Signaturen S der Vertragsparteien A und B auch von einem einzigen Zertifikat-Aussteller bereitgestellt werden.

Das in der Abbildung 3 gezeigte dritte Beispiel und das in Abbildung 4 gezeigte vierte Beispiel eines Schemas zum Abwickeln von Transaktionen bzw. Vertragsverhandlungen zwischen zwei Vertragsparteien A und B über das Internet I mittels digitalen Dokumenten D entsprechen in den wesentlichen Elementen und Funktionalitäten den beiden in den Abbildungen 1 und 2 gezeigten Beispielen. Jedoch wird im dritten und im vierten Beispiel eine Transaktion bzw. eine Vertragsschließung mittels einer vertrauenswürdigen dritten Stelle durchgeführt (z.B. Marketplace oder Broker). Im in der Abbildung 3 dargestellten Beispiel ist die vertrauenswürdige dritte Stelle über das Internet I mit den beiden Vertragsparteien A und B verbindbar und als Datenverarbeitungsvorrichtung P, wie z.B. als Proxy-Server, zur automatisierten Abwicklung von Transaktionen bzw. Vertragsverhandlungen oder -schließungen ausgebildet. Die Datenverarbeitungsvorrichtung P des dritten Beispiels übernimmt dabei lediglich die passive Funktion eines Zeugen, der von den beiden Vertragsparteien A und B empfange Dokumente zwischenspeichert, ggf. signiert und an die jeweils andere Vertragspartei weiterleitet. Zusätzlich kann die Datenverarbeitungsvorrichtung P jedes übertragene digitale Dokument D nummerieren, mit der aktuellen Zeit versehen und diese Angaben signieren (Zeitstempelfunktion). Im in der Abbildung 4 gezeigten vierten Beispiel ist die vertrauenswürdige dritte Stelle als Datenverarbeitungsvorrichtung C zur Übernahme von Garantiefunktionen realisiert und erbringt abhängig von in einem digitalen Dokument D zwischen den Vertragsparteien A und B festgelegten Bedingungen gewisse Garantieleistungen. Die Ausgestaltung der Datenverarbeitungsvorrichtung P von Abbildung 3 und der Datenverarbeitungsvorrichtung C von Abbildung 4 werden weiter unten näher spezifiziert.

Wie oben angesprochen wurde, schlägt die vorliegende Erfindung ein Format für digitale Dokumente D sowie Funktionalitäten für Computersoftware für Datenverarbeitungsvorrichtungen sowie Datenverarbeitungsvorrichtungen zur automatisierten Abwicklung von Transaktionen, Vertragsverhandlungen und Vertragsschließungen zwischen Vertragsparteien A und B in einem Kommunikationsnetz, wie z.B. dem Internet I, vor. Weiterhin schlägt die vorliegende Erfindung vor, funktionsrelevante Daten (Identifikationsart, Identitäts- und weitere Attribute usw.) auf das qualifizierte Zertifikat von A und B zu beziehen, um auch im Falle von Pseudonymität oder Anonymität über die tatsächliche Existenz der jeweiligen Vertragspartei unterrichtet zu sein, selbst wenn sie unter verschiedenen und ggf. immer wieder neuen Identitäten und/oder Attributen auftritt. Die Datenverarbeitungsvorrichtungen sind dabei beispielsweise Rechner der Vertragsparteien A und B sowie Server von vertrauenswürdigen dritten Stellen, wie sie in Abbildung 3 durch die Datenverarbeitungsvorrichtung P und in Abbildung 4 durch die Datenverarbeitungsvorrichtung C dargestellt sind. Das Format der digitalen Dokumente D bildet die Basis für bei derartigen Transaktionen bzw. Vertragsschließungen entstehenden Vertragsdokumenten und stellt die rechtssichere und rechtsbindende automatisierte Abwicklung über das Internet I sicher. Die erfindungsgemäßen Datenverarbeitungsvorrichtungen sowie die für diese vorgesehene Computersoftware können die digitalen Dokumente D bzw. deren Dokumentenformat eindeutig erkennen, interpretieren und hierdurch automatisiert maschinell auswerten und prüfen. Weiterhin können dank des vorgeschlagenen Dokumentenformates automatisch neue bzw. modifizierte Vertragsdokumente erstellt und an die andere Vertragspartei übermittelt werden.

Bei dem insbesondere für elektronische Vertragsdokumente verwendeten digitalen Dokumentenformat gemäß der vorliegenden Erfindung sind spezielle standardisierte Felder festgelegt. Jedes Feld besteht aus einer Zuordnung von Bezeichner und einem oder mehreren Werten, wobei als Werte auch weitere Feldstrukturen bzw. Verweise darauf verwendet werden können. In einer entsprechend zugeordneten Formatbeschreibung wird jeder dem Standard entsprechende Feldbezeichner einschließlich der für diesen Feldbezeichner erlaubten Werte definiert. Ein digitales Dokument D gemäß der vorliegenden Erfindung umfasst dabei zumindest je ein Feld zur Angabe der rechtmäßigen pseudonymen oder nicht-pseudonymen Identitäten der Vertragsparteien A und B und ein oder mehrere Felder zur Angabe von Vertragsmodalitäten. Genauer gesagt sollten für zumindest einige der folgenden Angaben entsprechende Felder zur Verfügung stehen:
- Angaben zur Identität der Parteien sowie deren rechtlicher Status;
- Angaben zu einer oder mehreren vertrauenswürdigendritten Stellen (Datenverarbeitungsvorrichtung P von Abbildung 3 oder Datenverarbeitungsvorrichtung C von Abbildung 4);
- Angaben zu identitätsaufdeckenden Stellen (z.B. Datenverarbeitungsvorrichtung C von Abbildung 4) und einen Verweis auf eine Policy, die die Bedingungen für ein Aufdecken einer pseudonymen Identität einer Vertragspartei A bzw. B definiert;
- Angaben zu den Verpflichtungen und Rechten der einzelnen Vertragsparteien A bzw. B, z.B. Zahlungsart, Zahlungsbedingungen, Lieferbedingungen etc.;
- Zahlungsdaten;
- Vertragsumstände, z.B. Liste von Dokumenten oder anderen Daten (oder eindeutige Kennzeichen bzw. Hash-Werte davon), die kausal zur Entstehung dieses digitalen Dokumentes D geführt haben;
- Speicherpflichten, Löschpflichten, insbesondere Vorlagepflichten für das digitale Dokument D.

Falls das verwendete digitale Dokument D mit einer digitalen Signatur S versehen ist, so kann die digitale Signatur S jeweils durch ein (qualifiziertes) Zertifikat Z zertifiziert sein, wie z.B. in den in Abbildung 2 und 4 gezeigten Beispielen. Vorteilhafterweise können die Zertifikate (Attributszertifikate) eine Policy bzw. einen Verweis auf eine Policy mit Konsequenzen für die Nichterfüllung von in dem digitalen Dokument D vereinbarten Leistungen beinhalten, die auch von der Identifikationsart und/oder von den Identitäts- und weiteren Attributen beeinflusst werden können. Zusätzlich beschreibt die Policy, welches Dokumentenformat mit dieser digitalen Signatur S signiert werden darf, um ein semiotisch sicheres Umfeld für die Signaturerzeugung zu gewährleisten. Damit wird sichergestellt, dass im Rahmen der jeweiligen Abwicklung rechtssicherer Transaktionen bzw. Verträge digitale Dokumente D nur dann rechtsgültig sind, wenn sie das in dem jeweiligen Zertifikat angegebene Dokumentenformat einhalten und in dem vorgesehenen Kontext gesehen, verstanden und signiert wurden. Weiterhin kann, um das Dokumentenformat flexibel und erweiterbar zu gestalten, das digitale Dokument D einen standardisierten Passus bzw. ein weiteres Feld enthalten, worin auf erweiterte Dokumentbeschreibungen verwiesen wird. Hierbei ist es nur mit Einverständnis aller Vertragsparteien A und B möglich, beliebige Formaterweiterungen zur Beschreibung des Vertragsinhaltes zu verwenden. Weiterhin wird durch diesen überprüfbaren standardisierten Passus bzw. das standardisierte Feld erreicht, das ein automatisch signierender Rechner einer Vertragspartei A bzw. B ein digitales Dokument D nur dann signiert, wenn er die verwendeten Formaterweiterungen kennt und auswerten kann.

Zusätzlich können im Dokumentenformat weitere Felder vorgesehen werden, die Originaldaten in beliebigen anderen angegebenen Formaten enthalten können, die für das Zustandekommen eines Vertrages wesentlich sind. Hierdurch kann die Ursache von Missverständnissen, die bei der Erstellung des Vertrages aufgetreten sind, erkannt werden. Das vorgeschlagene digitale Dokument D der vorliegenden Erfindung mit dem standardisierten Dokumentformat und der Formatbeschreibung, auf die im Dokument gegebenenfalls verwiesen wird, ermöglicht insbesondere bei der Anwendung auf elektronische Verträge eine maschinelle automatische Erstellung derartiger Dokumente auf den Rechnern von Vertragsparteien A und B und eine entsprechende automatisierte Überprüfungsanalyse unter Anwendung einer natürlichen, nicht formalisierten Sprache, mittels angemessener Formalisierung des Kontextes (im Dokument, um das Dokument). Weiterhin wird eine vertrauenswürdige dritte Stelle, wie beispielsweise durch die Datenverarbeitungsvorrichtung C des in Abbildung 4 gezeigten vierten Beispiels, über Erfüllung oder Nichterfüllung von in einem jeweiligen digitalen Vertragsdokument D definierten Vertragsbedingungen automatisch entscheiden, soweit dies keine semantische Interpretationsaktivität erfordert. Außerdem ermöglicht das standardisierte Format die Abdeckung entsprechender Transaktionen oder Vertragsschließungen mit Haftpflichtversicherungen, Rechtsschutzversicherungen oder dergleichen, um beim Eintreten jeweils definierter Bedingungen die durch eine vertrauenswürdige dritte Stelle, wie z.B. die Datenverarbeitungsvorrichung C von Abbildung 4, garantierten Leistungen zu erhalten. Weiterhin ermöglicht das erfindungsgemäße Dokumentenformat, ein Online-Schiedsgericht einzuschalten, welches über die relevanten Transaktionsinformationen verfügen kann, wie z.B. die Umstände der Vertragsentstehung und ein Protokoll der durchgeführten Leistungen, um bei Nicht- oder schlechter Erfüllung von in einem Vertragsdokument definierten Leistungen ebenfalls automatisiert eine Schiedsgerichtsfunktion auszuüben.

Wie bereits oben erwähnt wurde, kann die Rechtssicherheit der Transaktion bzw. Vertragsschließung zwischen zwei Vertragsparteien A und B im Gegensatz zu den in Abbildung 1 und Abbildung 2 gezeigten Beispielen, in denen die digitalen Dokumente D direkt zwischen den beiden Vertragsparteien A und B bzw. deren Rechnern ausgetauscht werden, die gesamte zur Transaktion gehörende Kommunikation und Übermittlung von digitalen Dokumenten D über eine vertrauenswürdige dritte Stelle abgewickelt werden. Im einfacheren in der Abbildung 3 gezeigten Fall ist die vertrauenswürdige dritte Stelle beispielsweise eine Datenverarbeitungsvorrichtung P, wie z.B. ein Proxy-Server, der die Funktionen eines elektronischen Zeugen übernimmt. Dazu gehört insbesondere, dass die Datenverarbeitungsvorrichtung P die von den Vertragsparteien A und B übermittelten digitalen Dokumente D in automatisierter Weise empfängt, zwischenspeichert und jeweils zur anderen Vertragspartei weiterleitet. Zusätzlich kann die Datenverarbeitungsvorrichtung P jedes übertragene digitale Dokument D nummerieren, mit der aktuellen Zeit versehen, diese Angaben signieren und das digitale Dokument D zwischenspeichern, bis die adressierte Vertragspartei den Empfang bestätigt. Das von der einen Vertragspartei empfangene und gegebenenfalls von dieser Vertragspartei signierte Dokument wird dabei gleichzeitig an die Datenverarbeitungsvorrichtung P und an die andere Vertragspartei gesendet, wobei die Datenverarbeitungsvorrichtung P das empfangene digitale Dokument D wie oben erwähnt mit einem Zeitstempel versieht, um Inhalt und Zeitpunkt zu bestätigen. Die Funktion des Zeugen kann nicht die rechtmäßige Identität der Parteien direkt erfassen, dennoch kann sie zumindest alle nicht aktiven/dynamischen Inhalte von Websites aufnehmen. Wer von den Parteien behauptet, dass ein gewisser Transaktionsablauf stattgefunden hat, kann dies anhand der von dem Zeugen signierten Dokumentation tatsächlich beweisen Dies ist insbesondere auch dann möglich, wenn das Verschlüsselungsprotokoll SSL verwendet wurde. In der Transaktion können beide Parteien Informationen für die nachträgliche Authentisierung einbinden, die nur ihnen bekannt sein können. Der Zeuge ("E-Witness" genannt) kann sowohl nur durch einen Proxy-Server als auch durch eine Kombination von Proxy-Server und auf der Clientdatenverarbeitungsvorrichtung lokal installierter Software bestehen.

Zur zusätzlichen Authentizitätsbestätigung kann das empfangene digitale Dokument gegebenenfalls zusammen mit dem Zeitstempel von der Datenverarbeitungsvorrichtung P digital signiert werden. Dieses Schema hat jedoch den Nachteil, dass die erste Vertragspartei, die das digitale Dokument D mit einer digitalen Signatur S versendet, das Risiko eingehen muss, dass die andere Vertragspartei ihre digitale Signatur gar nicht oder erst zu einem späteren Zeitpunkt leistet. Um dies zu verhindern, kann die Datenverarbeitungsvorrichtung P beispielsweise eine der folgenden Funktionalitäten erfüllen: In einer ersten Ausgestaltung der Datenverarbeitungsvorrichtung P nimmt diese zuerst die signierten Vertragsdokumente D der Vertragsparteien A und B vertraulich entgegen und sendet nur den von allen Vertragsparteien signierten Vertrag an alle Vertragsparteien zurück. Wird dabei nicht das Vertragsdokument D selber signiert, sondern nur ein kryptographisch eindeutiger Hash-Wert desselben, braucht die Datenverarbeitungsvorrichtung P bzw. deren Betreiber nichts über den Inhalt des Vertrages zu erfahren. In einer zweiten Ausgestaltung nimmt die Datenverarbeitungsvorrichtung P von der Vertragspartei A das signierte Dokument D entgegen, prüft die digitale Signatur S und informiert die Vertragspartei B über den Inhalt des korrekt signierten Vertragsdokumentes. Akzeptiert die Vertragspartei B den Vertrag, signiert stellvertretend die Datenverarbeitungsvorrichtung P den Vertrag für die Vertragspartei B und sendet den digital signierten Vertrag an beide Vertragsparteien A und B. Die digitale Signatur der Datenverarbeitungsvorrichtung P gilt dabei unter Vorbehalt einer im Vertragsdokument D enthaltenen Policy, die die Datenverarbeitungsvorrichtung P festlegt und die beide Vertragsparteien A und B durch die Wahl der Datenverarbeitungsvorrichtung P akzeptieren.

Diese Prozedur ist deswegen besonders wichtig, weil eine sehr verbreitete und wiederholte Anwendung der Signatur auch für Tagesgeschäfte als Folge ein Verlust an Bedeutung (und an Warnfunktion) der Signatur mit sich bringen kann. Womit man in einem solchen Fall die Signatur ersetzen würde, bleibt unklar, denn das Signieren hat durch zwei Jahrtausende Rechtspraxis eine große Bedeutung erlangt. Die Signatur ist also im Moment nicht leicht zu ersetzen. Daher ist es durchaus ratsam, eine zu häufige Anwendung der Signatur zu vermeiden. Die Zeugenfunktion kann gut das Signieren in allen nicht formgebundene Verträgen ersetzen (und ist eben so stark rechtlich und soziokulturell verankert wie das Signieren). Weiterhin hätte die hier beschriebene Prozedur den Vorteil, dass manche wichtige Vereinbarungen (wie hohe Zinsen, besondere Garantien usw.), die der Schriftform bedürfen, nicht versehentlich unterschrieben werden können (was ein weiterer Schutz für alle Beteiligten ist).

Mit dieser Prozedur erreicht man dasselbe Ziel der vertrauenswürdigen Rechtsdokumentation wie im ersten in Bezug auf die Abbildung 3 erläuterten Fall, zusätzlich aber auch durch die qualifizierte Zertifikate, Signaturen und Signaturprüfeinheiten die gegenseitige Authentisierung der Vertragsparteien.

In Abbildung 4 ist ein weiteres Schema zur automatisierten Abwicklung einer Transaktion bzw. eines Vertrages über das Internet I zwischen zwei Vertragsparteien A und B mittels einer vertrauenswürdige dritten Stelle dargestellt. Die vertrauenswürdige dritte Stelle des in Abbildung 4 gezeigten vierten Beispiels ist eine Datenverarbeitungsvorrichtung C, die zur Übernahme von Garantiefunktionen bei der Transaktion ausgestaltet ist, die unabhängig von in einem digitalen Dokument D zwischen den beiden Vertragsparteien A und B festgelegten Bedingungen garantierte Leistungen erbringt. Im Gegensatz zum in der Abbildung 3 gezeigten dritten Beispiel, in dem die Datenverarbeitungsvorrichtung D lediglich eine Zeugenfunktion innehat, nimmt die Datenverarbeitungsvorrichtung C im in der Abbildung 4 gezeigten vierten Beispiel aktiv an der Transaktion bzw. Vertragsabwicklung teil. Obwohl in der Abbildung 4 lediglich eine einzige Datenverarbeitungsvorrichtung C dargestellt ist, kann jeweils eine entsprechende Datenverarbeitungsvorrichtung für jede der Vertragsparteien A und B vorhanden sein. Im Folgenden wird der Ablauf der Einfachheit halber anhand einer einzigen Datenverarbeitungsvorrichtung C wie dargestellt erläutert.

Eine der grundlegenden Funktionalitäten der Datenverarbeitungsvorrichtung C ist das Signieren eines digitalen Dokumentes D für eine Vertragspartei A bzw. B durch Ausstellung eines entsprechenden Zertifikates für die jeweilige Identität der Vertragspartei. Hierzu umfasst die Datenverarbeitungsvorrichtung C eine entsprechende Zertifizierungseinrichtung. Die von der Datenverarbeitungsvorrichtung C zertifizierte Identität der jeweiligen Vertragspartei A bzw. B ist im in der Abbildung 4 gezeigten Beispiel vorzugsweise eine pseudonyme Identität, wodurch die Abwicklung von Transaktionen oder Verträgen ohne Preisgabe der rechtmäßigen (nicht-pseudonymen) Identität einer Vertragspartei ermöglicht ist. Beispielsweise kann die Datenverarbeitungsvorrichtung C eine Vertragspartei A, B anstelle durch eine pseudonyme Identität auch durch ein Bankkonto oder durch eine andere Masse oder flüssige bzw. unmittelbar verfügbare Werte, die online deponierbar sind, wie z.B. Geld, sonstige Werte, wie z.B. Titel, electronic cash, sofort fällige Kredite usw., identifiziert. Diese Zertifizierung ist besonders aussagekräftig in Bezug auf die Bonität des jeweiligen Zertifikatsinhabers. Durch eine entsprechende Gestaltung der in jedem Zertifikat enthaltenen Policy der Datenverarbeitungsvorrichtung C, in der u.a. die Konsequenzen für die Nichterfüllung von in einem Vertrag vereinbarten Leistungen definiert sind, kann sogar die realrechtliche Sicherung der vereinbarten Leistung zugesichert werden. Beispielsweise kann sich eine Vertragspartei A bzw. B völlig anonym durch eine begrenzte Menge an electronic cash oder eine Bargeldsumme identifizieren. Die Identität der Vertragspartei A bzw. B erlischt dabei mit dem zur Identifizierung verwendeten Geld. Alternativ kann sich eine Vertragspartei A bzw. B durch bestimmte in der Policy des Zertifikates definierte Zugriffsrechte auf ihr Bankkonto oder sonstiges online verfügbares Vermögen identifizieren: als sog. Pledge Account Identity (oder "Pfandkontoidentität") oder auch Limited Liability Person (LLP) oder Person mit beschränkter Haftung (PmbH) [Begriffe, die alle Gegenstand des Patentes sind], die weiter unten näher erläutert wird. Alternativ kann die Datenverarbeitungsvorrichtung C eine Vertragspartei A bzw. B im Rahmen der Zertifikatsausstellung auch durch ein bestehendes oder durch mehrere bestehende Rechtsverhältnisse identifizieren, wie z.B. über die mit den jeweiligen Versorgern abgeschlossenen Verträge zur Wasser-, Gas- oder Stromversorgung und/oder durch dementsprechende und eventuell entsprechend gestaltete Zahlgeräte bzw.

Zähleinrichtungen oder durch Verträge mit Telefon- oder Mobiltelefonprovidern. Eine derartige Identifizierung ist besonders aussagekräftig in Bezug auf den regelmäßigen Standort einer Vertragspartei und gilt in den angelsächsischen Rechtssystemen als eine sehr verbreitete Identifizierungstechnik.

Bei allen oben geschilderten Identifizierungsmechanismen sind die Identitäten und die Zertifikate pseudonym. Dies bedeutet, dass die ein entsprechend signiertes und zertifiziertes Dokument D empfangende Vertragspartei die anbietende Vertragspartei nicht kennt. Die einzige verfügbare Referenz ist der Aussteller des Zertifikates, d.h. der Betreiber der Datenverarbeitungsvorrichtung C. Da der Aussteller eines Zertifikates im allgemeinen, jedenfalls im Rahmen der Europäischen Union, einem gesetzlichen Verbot unterliegt, die persönlichen Daten eines Zertifikatsinhabers, d.h. einer Vertragspartei A bzw. B, unbefugt zu offenbaren, sind für das in Abbildung 4 schematisch gezeigte Beispiel folgende Modelle denkbar:
1) Die Datenverarbeitungsvorrichtung C als Aussteller der Zertifikate bekommt von den Zertifikatsinhabern, d.h. den Vertragsparteien, die Ermächtigung, im Falle eines Rechtsstreites oder für bestimmte im Vertrag festgelegte Bedingungen, die persönlichen Angaben bezüglich der Identität gegenüber der anderen Vertragpartei (bzw. einer dritten Partei, die beauftragt von den beiden Vertragsparteien als Mittler auftreten oder definierte Handlungen ausführen kann) zu offenbaren.
2) Die Datenverarbeitungsvorrichtung C als Aussteller des Zertifikates bekommt von dem Zertifikatsinhaber, d.h. der Vertragspartei, die auf Zeit unwiderrufliche Ermächtigung, auf Bankkonten oder sonstige online verfügbare Werte zuzugreifen, um in einem Vertrag festgelegte Leistungen dieser Vertragspartei unwiderruflich durchzuführen.
3) Die Datenverarbeitungsvorrichtung C als Aussteller der Zertifikates bekommt eine gewisse Menge an Geld oder Titeln zum Zweck der Vertragserfüllung oder einer Schadensersatzleistung in Aufbewahrung oder Verwaltung. Der Auftrag kann sich dabei auch auf Zahlungsmittel für eine einzelne Transaktion beziehen.
4) Die Datenverarbeitungsvorrichtung C als Aussteller des Zertifikates versichert die einzelnen Transaktionen bzw. Vertragsschlüsse.
5) Die Datenverarbeitungsvorrichtung C als Aussteller des Zertifikates akzeptiert bzw. garantiert, unter bestimmten, in der Policy des Zertifikates beschriebenen Bedingungen, bestimmte in der Transaktion bzw. im Vertrag festgelegte Leistungen zu erfüllen.

In der Regel wird die Vertragspartei, die den Dienstleister mit der Datenverarbeitungsvorrichtung C ermächtigt hat, unter bestimmten Bedingungen die Identität anderen gegenüber zu offenbaren oder definierte Dienstleistungen zu erbringen, dies daran koppeln, dass sie über die Erbringung solcher Aufgaben durch den Dienstleister informiert wird.

Falls, wie im in der Abbildung 4 gezeigten vierten Beispiel durch die Datenverarbeitungsvorrichtung C, ein digitales Dokument D stellvertretend von einer vertrauenswürdigen dritten Stelle für eine Vertragspartei A bzw. B signiert und zertifiziert wird, ist die Datenverarbeitungsvorrichtung C im Falle der Nichteinhaltung einer im digitalen Dokument D enthaltenen Verpflichtung durch die eigentliche Vertragspartei gegenüber der anderen Vertragspartei verpflichtet, abhängig von den in der dem Zertifikat zugeordneten Policy festgelegten Bedingungen der anderen Vertragspartei die rechtmäßige (nicht-pseudonyme) Identität der eigentlichen Vertragspartei nachzuweisen, die versprochene Leistung oder Ersatzleistung im Auftrag der eigentlichen Vertragspartei zu erfüllen, einen gleichwertigen beispielsweise geldwerten Ersatz zu leisten oder die versprochene Leistung selbst zu erfüllen.

Im Falle des Nachweises der rechtmäßigen (nicht-pseudonymen) Identität der eigentlichen Vertragspartei muss die Datenverarbeitungsvorrichtung C entweder für das geltende Dokument D die originale digitale Signatur der eigentlichen Vertragspartei vorweisen können oder eine von der eigentlichen Vertragspartei signierte Erklärung vorweisen können, die beinhaltet, dass die Vertragspartei für alle Verpflichtungen haftet, die sich aus Dokumenten ergeben, die mit der verwendeten pseudonymen Identität signiert wurden. Zusätzlich muss die Datenverarbeitungsvorrichtung C ein signiertes Dokument vorlegen oder zumindest besitzen, aus dem hervorgeht, dass abhängig vom anzuwendenden Modell die Datenverarbeitungsvorrichtung C berechtigt ist, die rechtmäßige nicht-pseudonyme Identität der eigentlichen Vertragspartei nachweisbar zu offenbaren, wenn die in der Policy definierten Bedingungen erfüllt sind, die Datenverarbeitungsvorrichtung C berechtigt bzw. ermächtigt ist, die Zahlung im Auftrag der eigentlichen Vertragspartei durchzuführen, oder die Datenverarbeitungsvorrichtung C verpflichtet ist, Leistungen, Ersatzleistungen oder Schadensersatz für die eigentliche Vertragspartei zu leisten.

Im Folgenden wird eine bereits oben kurz angesprochene Identifizierungs- und Zahlungsmethode mit Hilfe der sog. Pledge Account Identity (Pfandkontoidentität) oder LLP (PmbH) beschrieben, die von der Datenverarbeitungsvorrichtung C angewendet werden kann, um Zahlungsvorgänge rechtssicher zu machen. Gleichzeitig kann der Zahlende von anderen nicht unbefugt identifiziert werden, oder seine Transaktionen können nicht verkettet werden. In diesem Modell ist die Datenverarbeitungsvorrichtung C beispielsweise ein Server einer Bank oder dergleichen. Die Datenverarbeitungsvorrichtung C führt in diesem Fall ein Konto im Namen einer Vertragspartei A, mit dem diese Vertragspartei A wie mit einem gewöhnlichen Bankkonto arbeiten kann. Zusätzlich kann die Vertragspartei A jedoch unter pseudonymen Identitäten, die von der Datenverarbeitungsvorrichtung C zertifiziert werden, Verträge im Rahmen digitaler Dokumente D abschließen, wobei die Datenverarbeitungsvorrichtung C Verpflichtungen der Vertragspartei A aus diesen Verträgen an deren Stelle begleicht. Dabei überprüft die Datenverarbeitungsvorrichtung C anhand des Vertrages und anhand vorgelegter Beweise vor Auszahlung des vertraglich bestimmten Vertrages, ob die andere beteiligte Vertragspartei B ihre Verpflichtungen erfüllt hat. Ein solcher Beweis könnte beispielsweise die Lieferbestätigung eines Lieferservices oder dergleichen sein.

Zur mehrseitigen Sicherheit gehört weiterhin, dass eine Vertragspartei A, soweit sie dies wünscht, anonym oder zumindest pseudonym agieren kann. Das ist durch folgende Maßnahmen, die sich auf alle oben unter Bezug auf die Abbildungen 1 bis 4 erläuterten Beispiele beziehen, erreichbar:
- Anonymisierung und gegebenenfalls Verschlüsselung der Netzverbindung von Vertragspartei A bzw. B gegenüber dem Internet I ist grundsätzlich erforderlich, da sonst eine Pseudonymisierung der Parteien nutzlos wäre. Zur Anonymisierung sind verschiedene Methoden verwendbar, abhängig davon, mit welcher Zuverlässigkeit man sich vor Angreifer schützen möchte, z.B. einfache Zwischenstationen, starke Anonymisierungsdienste wie Mixnetz, Mixkaskade, Freedom usw.
- Signaturen, die keinen Bezug zur Identität einer Vertragspartei herstellen, Zertifizierung der Signaturen durch Stellen, die entweder die Identität aufdecken können oder für Aktionen der Vertragspartei haften bzw. Garantieleistungen in bestimmter maximaler Höhe erbringen.
- Sicherheit gegen Benachteiligung bzw. Bevorteilung einer pseudonymen/anonymen Vertragspartei durch mehrseitig sichere Transaktionsmodelle. Beispielsweise könnte eine anonyme Vertragspartei Verträge abschließen, ohne dafür zu haften, jedoch kann sie sich in der Regel auch nicht gegen Vertragsverletzungen der anderen Vertragspartei wehren, ohne ihre Anonymität aufzugeben.
- Indeterministische, asymmetrische Verschlüsselung der Lieferadresse für den vereinbarten Lieferservice. Hierdurch wird erreicht, dass der Internethändler keine personenbezogenen Daten des Kunden erhalten muss.
- Kontrolle einer Vertragspartei über ihre Wiedererkennbarkeit durch andere Vertragsparteien mittels freier Wahl ihrer pseudonymen Identität.

Es ist anzumerken, dass die weiter oben beschriebenen Funktionalitäten der Rechner der Vertragsparteien A und B sowie der Datenverarbeitungsvorrichtung P zur Übernahme von Zeugenfunktionen gemäß dem Beispiel von Abbildung 3 und der Datenverarbeitungsvorrichtung C zur Übernahme von Garantiefunktionen gemäß dem Beispiel von Abbildung 4 automatisiert durch Computersoftware ausgeführt werden. Die vorliegende Erfindung bezieht sich somit auch auf Computersoftware zur Durchführung der jeweiligen Funktionalitäten auf den entsprechenden Rechnern.

## Patentansprüche

1. Digitales Dokument (D), insbesondere Vertrag, für Transaktionen oder Vertragsschließungen zwischen Vertragsparteien in einem Kommunikationsnetz (I), mit einem Dokumentenformat mit standardisierten Feldern zur Angabe von Identitäten der Vertragsparteien (A, B) und zur Angabe von Vertragsmodalitäten, wobei die Felder jeweils aus einem standardisierten Feldbezeichner und mindestens einem für diesen Feldbezeichner erlaubten Wert bestehen, so dass insbesondere auf der Basis von digitalen Signaturen (S) eine automatisierte Abwicklung von Transaktionen oder Vertragsschließungen ermöglicht ist.

2. Digitales Dokument (D), insbesondere Vertrag, gemäß Anspruch 1,
**dadurch gekennzeichnet,**
**dass** weitere Felder zur Angabe des rechtlichen Status der Vertragsparteien (A, B), zur Angabe von vertraglichen Rechten und Pflichten der Vertragsparteien, zur Angabe von Zahlungsmodalitäten, zur Angabe von Vorlage- bzw. Aufbewahrungspflichten und/oder zur Angabe von Vertragsumständen vorgesehen sind.

3. Digitales Dokument (D), insbesondere Vertrag, gemäß Anspruch 2,
**dadurch gekennzeichnet,**
**dass** die Felder zur Angabe von Vertragsumständen ein Feld zur Angabe von mit der Entstehung des digitalen Dokumentes in Zusammenhang stehenden weiteren Dokumenten oder Daten umfassen.

4. Digitales Dokument (D), insbesondere Vertrag, mit einen digitalen Dokumentenformat gemäß Anspruch 2 oder 3,
**dadurch gekennzeichnet,**
**dass** das Feld zur Angabe der vertraglichen Rechte und Pflichten eine Liste der vertraglichen Rechte und Pflichten der Vertragsparteien (A, B) bzw. einen Verweis auf ein weiteres Dokument umfasst, das diese Angaben enthält.

5. Digitales Dokument (D), insbesondere Vertrag, gemäß Anspruch 4,
**dadurch gekennzeichnet,**
**dass** das Feld zur Angabe von mit der Entstehung des Dokumentes in Zusammenhang stehenden Dokumenten oder Daten eine Liste von Dokumenten bzw. eindeutige Verweise auf Dokumente umfasst, die diese Angaben enthalten.

6. Digitales Dokument (D), insbesondere Vertrag, gemäß Anspruch 4 oder 5,
**dadurch gekennzeichnet,**
**dass** jede digitale Signatur (S) durch ein Zertifikat (Z) zertifiziert ist, wobei jedes Zertifikat eine Policy bzw. einen Verweis auf eine Policy mit Konsequenzen für die Nichterfüllung von in dem Dokument vereinbarten Leistungen enthält.

7. Digitales Dokument (D), insbesondere Vertrag, gemäß Anspruch 6,
**dadurch gekennzeichnet,**
**dass** jeweils ein Feld zur Angabe eines Identitätsmerkmales für jede Vertragspartei (A, B) vorgesehen ist, wobei jedes derartige Feld einen öffentlichen digitalen Signaturtestschlüsssel der jeweiligen Vertragspartei mit einer Angabe des zugeordneten Zertifikates enthält.

8. Digitales Dokument (D), insbesondere Vertrag, gemäß Anspruch 6 oder 7,
**dadurch gekennzeichnet,**
**dass** die Policy die Umstände zur Aufdeckung der rechtmäßigen (nicht-pseudonymen) Identitäten der Vertragsparteien (A, B) definiert.

9. Digitales Dokument (D), insbesondere Vertrag, gemäß Anspruch 8,
**dadurch gekennzeichnet,**
**dass** die Policy einen Verweis auf eine (oder ggf. mehrere) dritte Stelle(n) (C) enthält, die bei Eintreten der entsprechenden Umstände einer Vertragspartei (A) die Identität einer anderen Vertragspartei (B) aufdeckt/aufdecken.

10. Digitales Dokument (D), insbesondere Vertrag, gemäß Anspruch 8 oder 9,
**dadurch gekennzeichnet,**
**dass** die Policy die Umstände zur Erfüllung offener Forderungen bzw. Erbringung gleichwertiger Ersatzleistungen definiert.

11. Digitales Dokument (D), insbesondere Vertrag, gemäß Anspruch 10,
**dadurch gekennzeichnet,**
**dass** die Policy einen Verweis auf eine (oder ggf. mehrere) dritte Stelle(n) enthält, die bei Eintreten entsprechender Umstände die offenen Forderungen einer Vertragspartei gegen eine andere Vertragspartei erfüllt bzw. gleichwertige Ersatzleistungen erbringt/erbringen.

12. Digitales Dokument, insbesondere Vertrag, gemäß einem der Ansprüche 8 bis 11,
**dadurch gekennzeichnet,**
**dass** die Policy die Angabe eines Dokumentenformates enthält, so dass das Zertifikat (Z) nur dann gültig ist, wenn das digitale Dokument das angegebene Dokumentenformat einhält.

13. Digitales Dokument (D), insbesondere Vertrag, gemäß Anspruch 12,
**dadurch gekennzeichnet,**
**dass** die Angabe des Dokumentenformates eine Formatbeschreibung enthält, die die standardisierten Felder des Dokumentenformates definiert und mit einer eindeutigen Bedeutung versieht.

14. Digitales Dokument (D), insbesondere Vertrag, gemäß Anspruch 13,
**dadurch gekennzeichnet,**
**dass** die Formatbeschreibung ein Feld mit einem Verweis auf weitere Formatbeschreibungen definiert, die weitere gültige Felder für das Dokumentenformat definieren.

15. Datenverarbeitungsvorrichtung (P), insbesondere Proxy-Server, zur Übernahme von Zeugenfunktionen bei der automatisierten Abwicklung von Transaktionen oder Vertragsschließungen zwischen Vertragsparteien (A, B) in einem Kommunikationsnetz (I), wobei die Datenverarbeitungsvorrichtung zum automatisierten Empfangen, Zwischenspeichern und Weiterleiten von digitalen Dokumenten (D) gemäß einem der Ansprüche 1 bis 14 ausgelegt ist.

16. Datenverarbeitungsvorrichtung (P), insbesondere Proxy-Server, gemäß Anspruch 15,
**dadurch gekennzeichnet,**
**dass** empfangene Dokumente (D) mit einem Zeitstempel versehen, bevor sie zwischengespeichert bzw. weitergeleitet werden.

17. Datenverarbeitungsvorrichtung (P), insbesondere Proxy-Server, gemäß Anspruch 15 oder 16,
**dadurch gekennzeichnet,**
**dass** empfangene Dokumente (D) digital signiert werden.

18. Datenverarbeitungsvorrichtung (P), insbesondere Proxy-Server, gemäß Anspruch 17,
**dadurch gekennzeichnet,**
**dass** ein von einer Vertragspartei (A) empfangenes Dokument (D) digital signiert, an die andere Vertragspartei (B) weitergeleitet und zumindest bis zum Erhalt einer Empfangsbestätigung zwischengespeichert wird.

19. Datenverarbeitungsvorrichtung (P), insbesondere Proxy-Server, gemäß Anspruch 15 oder 16,
**dadurch gekennzeichnet,**
**dass** ein von einer Vertragspartei (A) erhaltenes und mit einer digitalen Signatur (S) versehenes Dokument (D) ohne die digitale Signatur an die andere Vertragspartei (B) weitergeleitet wird, wobei erst nach Erhalt des Dokumentes von der anderen Vertragspartei einschließlich digitaler Signatur (S) das von der einen (A) und der anderen (B) Vertragspartei digital signierte Dokument (D) an die beiden Vertragsparteien (A, B) zurückgesendet wird. Für diese Datenverarbeitungsvorrichtung wird der Name "E-Witness" oder "Online-Zeuge" in Anspruch genommen

20. Datenverarbeitungsvorrichtung (C) zur Übernahme von Garantiefunktionen bei automatisierten Transaktionen oder Vertragsschließungen zwischen Vertragsparteien (A, B) unter Verwendung von digitalen Dokumenten (D) gemäß einem der Ansprüche 1 bis 14 in einem Kommunikationsnetz (I), wobei abhängig von in einem digitalen Dokument (D) festgelegten Bedingungen garantierte Leistungen erbracht werden.

21. Datenverarbeitungsvorrichtung (C) zur Übernahme von Garantiefunktionen gemäß Anspruch 20,
**gekennzeichnet durch**
eine Zertifizierungseinrichtung zum Ausstellen von Zertifikaten (Z) für Identitäten, wobei jedes Zertifikat eine Policy bzw. einen Verweis auf eine Policy mit Konsequenzen für die Nichterfüllung von in einem Vertrag vereinbarten Leistungen enthält.

22. Datenverarbeitungsvorrichtung (C) zur Übernahme von Garantiefunktionen gemäß Anspruch 20 oder 21,
**gekennzeichnet durch**
eine Identitätsverwaltungseinrichtung zum Verwalten von pseudonymen und nicht-pseudonymen Identitäten von Vertragsparteien (A, B).

23. Datenverarbeitungsvorrichtung (C) zur Übernahme von Garantiefunktionen gemäß Anspruch 22,
**dadurch gekennzeichnet,**
**dass** die Identitätsverwaltungseinrichtung die rechtmäßige (nicht-pseudonyme) Identität einer Vertragspartei (A) abhängig von der Nichterfüllung von in einem Vertrag festgelegten Leistungen gegenüber der anderen Vertragspartei (B) oder einer dritten Partei offenbart.

24. Datenverarbeitungsvorrichtung (C) zur Übernahme von Garantiefunktionen gemäß Anspruch 22,
**dadurch gekennzeichnet,**
**dass** die Identitätsverwaltungseinrichtung für eine pseudonyme Identität einer Vertragspartei (A) die vertraglich vereinbarte Leistung einer bestimmten Geldsumme gegenüber der anderen Vertragspartei (B) garantiert.

25. Datenverarbeitungsvorrichtung (C) zur Übernahme von Garantiefunktionen gemäß Anspruch 24,
**dadurch gekennzeichnet,**
**dass** die Identitätsverwaltungseinrichtung anstelle der Angabe einer Identität für eine Vertragspartei das Vorhandensein einer bestimmten Geldsumme in einem Vertrag signiert.

26. Computersoftware für automatisierte Transaktionen oder Vertragsschließungen zwischen Vertragsparteien (A, B) in einem Kommunikationsnetz (I) auf der Basis von digitalen Dokumenten gemäß einem der Ansprüche 1 bis 14, wobei die Computersoftware, wenn sie auf einer Datenverarbeitungsvorrichtung des Kommunikationsnetzes (I) installiert ist, derartige digitale Dokumente automatisch erstellt, ggf. signiert und an eine Vertragspartei sendet.

27. Computersoftware gemäß Anspruch 26,
**dadurch gekennzeichnet,**
**dass** sie ein von einer Vertragspartei (A) empfangenes Dokument (D) automatisch prüft, gegebenenfalls ändert und an die Vertragspartei (B) zurücksendet.

28. Computersoftware gemäß Anspruch 26 oder 27,
**dadurch gekennzeichnet,**
**dass** sie die dynamische Verwaltung von Identitätsattributen, Identifikationsarten und weiteren Attributen ermöglicht, die auf eine Person, ggf. mit einem qualifizierten Zertifikat, bezogen sind.

29. Computersoftware gemäß Anspruch 26, 27 oder 28,
**dadurch gekennzeichnet,**
**dass** sie die Verwaltung der Dritten gegenüber offenbarten persönlichen Profile ermöglicht.

30. Computersoftware gemäß einem der Ansprüche 26 bis 29,
**dadurch gekennzeichnet,**
**dass** sie den Warenkorb für Routineeinkäufe anhand der Dokumente bzw. Verträge gemäß Ansprüche 1 bis 14 lokal zusammenstellt und verwaltet.
